# EUROPÄISCHE PATENTSCHRIFT

(11) **EP 3 714 534 B1**
(45) Veröffentlichungstag und Bekanntmachung des Hinweises auf die Patenterteilung: **25.10.2023**
(21) Anmeldenummer: 18819447.6
(22) Anmeldetag: 22.11.2018
(51) Int. Cl.: H02K 15/04, H02K 3/12

(54) **EINHEIT, EINRICHTUNG, VORRICHTUNG UND VERFAHREN ZUM BIEGEN UND HERSTELLEN VON WELLENWICKLUNGEN FÜR SPULENWICKLUNGEN ELEKTRISCHER MASCHINEN**
UNIT, DEVICE, APPARATUS AND METHOD FOR BENDING AND PRODUCING WAVE WINDINGS FOR COIL WINDINGS OF ELECTRIC MACHINES
UNITÉ, MOYEN, DISPOSITIF ET PROCÉDÉ DE PLIAGE ET DE PRODUCTION D'ENROULEMENTS ONDULÉS POUR ENROULEMENTS DE BOBINE DE MACHINES ÉLECTRIQUES

(30) Priorität: 22.11.2017 DE 102017127634
(43) Veröffentlichungstag der Anmeldung: 30.09.2020
(73) Patentinhaber: Grob-Werke GmbH & Co. KG, 87719 Mindelheim (DE)
(72) Erfinder: SCHMID, Frederik, 89281 Altenstadt (DE); RAUSCHER, Ralf, 87748Fellheim (DE)
(74) Vertreter: KASTEL Patentanwälte PartG mbB
(86) Internationale Anmeldenummer: PCT/DE2018/100954
(87) Internationale Veröffentlichungsnummer: WO 2019/101272

(56) Entgegenhaltungen:
- EP-A2- 2 380 674
- WO-A1-2016/030461
- DE-A1-102009 008 615
- GB-A- 1 298 666
- US-A1- 2011 278 980

## Beschreibung

Die Erfindung betrifft eine Biegeeinheit zum Biegen einer Biegung einer Wellenwicklung für eine Spulenwicklung einer elektrischen Maschine. Weiter betrifft die Erfindung eine Biegeeinrichtung zum Formen einer Wellenform einer Wellenwicklung für eine Spulenwicklung einer elektrischen Maschine. Weiter betrifft die Erfindung eine Wellenwickelherstellvorrichtung zum Herstellen einer Wellenwicklung für eine elektrische Maschine. Weiter betrifft die Erfindung ein Biegeverfahren zum Biegen einer Biegung einer Wellenwicklung für eine Spulenwicklung einer elektrischen Maschine. Schließlich betrifft die Erfindung ein Wellenwickelherstellverfahren zum Herstellen einer Wellenwicklung für eine Spulenwicklung einer elektrischen Maschine.

Zum technologischen Hintergrund wird auf folgende Literaturstellen verwiesen:
[1] WO 2017/148619 A1
[2] EP 1 270 104 A1
[3] US 2016/052041 A1
[4] US 2010/231083 A1
[5] US 2009/276997 A1
[6] DE 10 2009 008 615 A1
[7] EP 2 380 674 A2
[8] US 2011/0278980 A1
[9] GB 1 298 666 A

Die vorliegende Erfindung liegt auf dem Gebiet der Herstellung von Elektromotoren oder sonstigen elektrischen Maschinen, wie beispielsweise Generatoren, die für hohe Leistungen, zuverlässigen Betrieb und hohe Effizienz ausgelegt sind. Insbesondere sollen Elektromotoren hergestellt werden, die als Fahrmotoren von Elektrofahrzeugen oder Hybridfahrzeugen einsetzbar sind und beispielsweise eine Nennleistung zwischen 20 kW und 400 kW aufweisen. Es ist zum Aufbau von Statoren derartiger leistungsfähiger elektrischer Maschinen vorteilhaft, eine möglichst hohe Spulendichte bereitzustellen. Hierzu ist aus den Literaturstellen [1], [3] und [5] bekannt, eine Wellenwicklung, bei der Drahtsegmente eines Drahtes mit Biegungen versehen sind, bereitzustellen, die in radial offene Nuten eines Haltekörpers, wie insbesondere dem Hauptkörper eines Stators oder eines Rotors, eingefügt werden können. Um einen besonders hohen Füllgrad zu erreichen, werden die Spulenwicklungen insbesondere aus Drähten mit rechteckigem Querschnitt hergestellt, für die in [1], [3] und [5] besondere Biegeverfahren sowie Wellenwicklungsherstellvorrichtungen, die Biegeeinrichtungen mit Biegeeinheiten aufweisen, vorgeschlagen. Dabei dient eine Biegeeinheit zum Herstellen einer Biegung. Eine Biegeeinrichtung zum Biegen benachbarter Biegungen weist eine erste Biegeeinheit und eine zweite Biegeeinheit auf. Eine Wellenwickelherstellvorrichtung weist mehrere derartige Biegeeinrichtungen auf.

Weitere Biegeeinheiten, Biegeeinrichtungen und Maschinen mit mehreren derartiger Biegeeinrichtungen sind aus den zusätzlichen Literaturstellen [2] und [4] bekannt.

In der Literaturstelle [1] ist eine Vorrichtung zum Herstellen eines wellenförmig gebogenen Drahtsegments, insbesondere für die Verwendung als Statorwicklung in einer elektrischen Maschine beschrieben, mit einer Linearführung und mehreren Formelementen, die an der Linearführung längsverschieblich und drehbar gelagert sind und die jeweils einen Aufnahmebereich zur Fixierung des zu biegenden Drahtsegmentes aufweisen. Zueinander gerichtete Enden der benachbarten Formelemente sind als Halteelemente ausgebildet, wobei ein erstes Halteelement an dem einen Formelement und ein zweites Element an einem zweiten Formelement als Biegeeinheit gemeinsam zum Herstellen einer Biegung zusammenwirken. Hierzu sind die Formelemente zum Biegen des daran fixierten Drahtsegments in Wellenform gegensinnig verdrehbar und gleichzeitig entlang der Linearführung zusammenfahrbar. In [1] ist nicht gelöst, wie der Vorgang der Herstellung von Biegungen synchronisiert werden kann. Die Dreh- und Linearbewegungen aller Formelemente sind nicht aufeinander abgestimmt. Weiter ist bei [1] die Biegekontur des Drahtes während des Biegevorganges komplett undefiniert, da die einzelnen Formelemente nur Endanschläge zueinander besitzen, jedoch keine Synchronisierung zueinander während des eigentlichen Prozesses. Der Draht wölbt sich also mit einer unbestimmten Form. Des Weiteren enthält [1] keine Lösung zum Antrieb der Vorrichtung, weder für die Linearbewegung noch die Drehbewegung der Formelemente.

Aus [2] ist eine Biegemaschine zum Verbiegen von Röhren, wie z.B. Röhren für eine Kraftstoffleitung von Kraftfahrzeugen oder Röhren für eine Kühlschlange, bekannt. Das Biegeverhalten von derartigen Röhren ist grundsätzlich unterschiedlich zu dem Verbiegen eines Drahtsegments mit rechtwinkligem Querschnitt. Um die Verbiegung derartiger Röhren ohne Kollabieren des Röhreninnenquerschnitts vornehmen zu können, weist die Biegemaschine Biegeeinheiten mit einem Formelement in Form eines Zylinderkörpers auf, um den die Röhren mit zwei Halteelementen herumgebogen werden. Hierzu ist an dem einen Halteelement eine Zahnstange und an dem anderen Halteelement ein mit der Zahnstange kämmendes Zahnrad vorgesehen. In der Biegemaschine sind mehrere Biegeeinrichtungen mit derartigen Biegeeinheiten aneinander gekoppelt, so dass eine Vorrichtung zum Herstellen einer wellenförmig gebogenen Röhre geschaffen ist, wobei jede Biegung um ein rundes Formelement herum gebogen wird. Der Ablauf ist in diesem Fall durch Zahnstangen und Stirnräder in den einzelnen Biegeeinheiten synchronisiert. Es ist mit dieser Vorrichtung nicht möglich, eine Kontur in die Biegung zu formen, da die Biegung nur um einen vorgegebenen Radius um den Mittelpunkt des Stirnrades gebogen werden kann. Des Weiteren entsteht aufgrund der Art der Verzahnung eine Relativbewegung zwischen den einzelnen Halteelementen der Röhre. Ein weiterer Nachteil ist, dass die geraden Abschnitte nicht fest in der Vorrichtung eingespannt sind, sondern nur gegen einen einseitigen Anschlag gedrückt werden.

Aus [3] ist eine Vorrichtung zur Herstellung eines wellenförmig gebogenen Drahtsegments bekannt. Hierbei werden Schieber mit Hilfe einer Spindel gegeneinander verschoben und zeitgleich quer zu der Ziehbewegung zusammengefahren. Das gleichmäßige Zusammenfahren der einzelnen Schieber wird hierbei durch eine Scherenkinematik gewährleistet. Hierzu müssen nur noch drei Achsen elektrisch synchronisiert werden. Die Form der Biegeköpfe, also der einzelnen Biegungen des Drahtes, wird bei dem aus [3] bekannten Verfahren durch die Form des Schiebers ausgeprägt. Bei dem aus [3] bekannten Verfahren sind die geraden Abschnitte nicht fest in der Vorrichtung eingespannt, sondern werden nur aufgrund der Spannung zwischen den einzelnen Schiebern gerade gezogen. Dabei wird die Belastung für den Draht sehr hoch, da der Biegekopf im gleichen Schritt geformt werden soll und die dafür erforderliche Zugkraft direkt zu einer Längung des Drahtes führt.

Aus [4] ist eine Vorrichtung zum Herstellen eines wellenförmig gebogenen Drahtsegments mit einem rechteckigen Biegekopf bekannt. Dabei wird durch mehrere Drehpunkte in einzelnen Formelementen die Form hergestellt. Der Draht wird in geraden Abschnitten fest eingespannt, so dass diese Abschnitte exakt gerade bleiben. Bei dem aus [4] bekannten Verfahren kann immer nur ein kleiner Abschnitt einer Wellenwickelmatte hergestellt werden, was zu Taktzeitproblemen führt. Außerdem ist die mögliche Kopfform sehr eingeschränkt.

Aus [5] ist eine Vorrichtung zum Herstellen eines wellenförmig gebogenen Drahtsegments mit einem rechteckigen Biegekopf bekannt. Dabei wird durch mehrere Drehpunkte in Formelementen die Form hergestellt. In einem zweiten Schritt wird die endgültige Kopfform geprägt. Auch bei dem aus [5] bekannten Verfahren kann immer nur ein kleiner Abschnitt einer Wellenwickelmatte auf einmal hergestellt werden, was zu Taktzeitproblemen führt. Außerdem sind mehrere Prozessschritte erforderlich.

Aus [6] sind ein Verfahren zur Herstellung einer über den Umfang verteilten Statorwicklung und ein Motor mit einer solchen Statorwicklung bekannt. Bei dem Verfahren wird ein Draht zwischen einem Paar erster Formen, einem Paar zweiter Formen und einem Paar dritter Formen gehalten, die zunächst aufeinanderfolgend nebeneinander angeordnet sind. Die Formen sind einzeln in Längsrichtung des Drahtes und in Querrichtung hierzu bewegbar. Zum Biegen wird das mittlere Paar zweiter Formen in Querrichtung bewegt, und das Paar erster Formen und das Paar dritter Formen wird in Längsrichtung des Drahtes aufeinander zu bewegt. In einer Ausführungsform erfolgt die Bewegung mittels Hydraulikzylinder, die entsprechend angesteuert werden. Die Ausrichtung der Formen bleibt bei der Bewegung gleich, so dass ein Wicklungskopf des Drahts mit mehreren Stufen gebogen wird.

Aus [7] ist ein spreizbarer Biegekopf zum plastischen Verformen von Biegegut zum Fertigen von verschiedenen Gestalten von Mäanderschlaufen für Solarmodule oder andere Wärmetauscher bekannt, wobei der Biegekopf mehrere verschwenkbare Biegefinger und einen verfahrbaren Schlitten aufweist. Die Biegefinger sind auf dem Schlitten gelagert und werden jeweils mittels eines Zahnradsegments, das mit einem angetriebenen Zahnrad kämmt, angetrieben. An dem Schlitten ist eine erste Halterung mit dem ersten Biegefinger und eine zweite Halterung mit dem zweiten Biegefinger vorgesehen, wobei die Halterungen auf dem Schlitten gegeneinander verschiebbar gelagert sind.

Aus [8] ist ein Statorwicklungsproduktionsverfahren unter Verwendung von mehreren Formpresspaaren bekannt, von denen jedes einen Stempel und ein Gesenk aufweist.

Aus [9] ist ein Rohrbieger zum Bilden U-förmiger Biegungen von Rohren bekannt, der ein Paar Dorne aufweist, die mit einer bogenförmigen Umfangsnut versehen sind, welche sich über etwa einen Viertel eines Kreises erstreckt. Die Dorne sind hin zu einer Rohrbiegeposition und weg von der Rohrbiegeposition relativ zueinander beweglich. Weiter weist der Rohrbieger ein Paar von Formwalzen auf, von denen jede um die Peripherie des mit Nut versehenen Bereichs eines einzelnen Dorns der Dorne bewegbar ist, wenn diese in der Rohrbiegeposition sind.

Die Erfindung hat sich zur Aufgabe gestellt, eine Einheit, eine Einrichtung, eine Vorrichtung und ein Verfahren zum Biegen und Herstellen von Wellenwicklungen für Spurenwicklungen elektrischer Maschinen bereitzustellen, mit denen einzelne Biegeabläufe einfacher synchronisierbar sind.

Eine entsprechende Wellenwickelherstellvorrichtung soll insbesondere derart gestaltet sein, dass sie so synchronisiert ist, dass möglichst wenig Antriebe erforderlich sind.

Zum Lösen dieser Aufgabe schafft die Erfindung eine Biegeeinheit zum Biegen einer Biegung einer Wellenwicklung für eine Spulenwicklung einer elektrischen Maschine nach Anspruch 1.

Eine Biegeeinrichtung zum Formen einer Wellenform einer Wellenwicklung für eine Spulenwicklung einer elektrischen Maschine umfassend mehrere solcher Biegeeinheiten, eine Wellenwickelherstellvorrichtung zum Herstellen einer Wellenwicklung für eine Spulenwicklung einer elektrischen Maschine, umfassend mehrere solcher Biegeeinrichtungen, ein Biegeverfahren zum Biegen einer Biegung einer Wellenwicklung für eine Spulenwicklung einer elektrischen Maschine, welches vorzugsweise mit der Biegeeinheit durchführbar ist, und ein Wellenwicklungsherstellverfahren, bei dem mehrere solcher Biegungen durchgeführt werden, sind Gegenstand der Nebenansprüche.

Vorteilhafte Ausgestaltungen der Erfindung sind Gegenstand der Unteransprüche.

Die Erfindung schafft gemäß einem ersten Aspekt davon eine Biegeeinheit zum Biegen einer Biegung einer Wellenwicklung für eine Spulenwicklung einer elektrischen Maschine, mit einem ersten Halteelement zum Halten eines ersten Segments eines zu biegenden Drahts, einem zweiten Halteelement zum Halten eines zweiten Segments des zu biegenden Drahts und wenigstens einer Biegeform zum Biegen eines Übergangsbereichs des Drahtes zwischen dem ersten Segment und dem zweiten Segment, wobei das erste und das zweite Halteelement über wenigstens eine mechanische Steuerkurve miteinander im Eingriff sind zum Steuern einer Relativverschwenkung und einer Relativverschiebung des ersten und des zweiten Halteelements.

Die wenigstens eine Steuerkurve ist an wenigstens einem der Halteelemente ausgebildet.

Es ist weiter vorgesehen, dass die wenigstens eine Steuerkurve Bereiche unterschiedlicher Krümmung hat.

Es ist bevorzugt, dass die wenigstens eine Steuerkurve einen geradlinigen Bereich oder Endbereich und einen gekrümmten Bereich oder Endbereich hat.

Es ist bevorzugt, dass die wenigstens eine Steuerkurve einen von einer Kreisform abweichenden ellipsoidalen Kurvenbereich hat.

Es ist bevorzugt, dass die wenigstens eine Steuerkurve eine von einem Endbereich zu einem anderen Endbereich gesehen in Stufen und/oder allmählich zunehmende Krümmung aufweist.

Es ist bevorzugt, dass die wenigstens eine Steuerkurve abhängig von der Biegeform derart gestaltet ist, dass der Draht während des gesamten Biegevorgangs auf Spannung gehalten wird.

Bei einer Alternative ist die wenigstens eine Steuerkurve an einem Halteelement ausgebildet, wobei ein an dem anderen Halteelement ausgebildetes Abgreifelement an der Steuerkurve entlang fährt.

Bei einer anderen Alternative ist vorgesehen, dass das erste Halteelement eine erste Steuerkurve hat und das zweite Halteelement eine zweite Steuerkurve hat, derart dass die erste und die zweite Steuerkurve als Abrollkurven oder Wälzkurven aufeinander abrollen.

Dabei können die erste und die zweite Steuerkurve reibschlüssig und/oder formschlüssig in Eingriff sein. Zum Beispiel kann an jeder der Steuerkurven ein Abrollbereich oder Wälzbereich vorgesehen sein, an dem die Steuerkurven reibschlüssig aneinander angreifen.

Es ist bevorzugt, dass an der ersten und der zweiten Steuerkurve komplementäre Vorsprungs-Rücksprungs-Ausbildungen und/oder Verzahnungen zum Schaffen eines formschlüssigen Eingriffs zwischen dem ersten und dem zweiten Halteelement ausgebildet sind.

Es ist bevorzugt, dass ein erster Bereich der Biegeform an dem ersten Halteelement und ein zweiter Bereich der Biegeform an dem zweiten Halteelement ausgebildet ist.

Es ist bevorzugt, dass der erste Bereich und der zweite Bereich der Biegeform jeweils wenigstens einen geradlinigen Bereich zwischen zwei gekrümmten Bereichen haben.

Es ist bevorzugt, dass der erste Bereich und der zweite Bereich der Biegeform spiegelbildlich zueinander ausgebildet sind.

Es ist bevorzugt, dass das erste und das zweite Halteelement jeweils eine Nutaufnahme oder Führungsnut zum Festhalten des ersten bzw. zweiten Segments aufweisen.

Es ist bevorzugt, dass das erste und das zweite Halteelement mittels wenigstens einer Vorspanneinrichtung elastisch in Richtung Eingriff zueinander vorgespannt sind.

Es ist bevorzugt, dass die Biegeeinheit wenigstens ein Gegenbiegeelement zum Durchführen einer Gegenbiegung aufweist, das bei zueinander zum Durchführen der Biegung verschwenktem ersten und zweiten Halteelement auf die Halteelement zu bewegbar ist, um zwischen den Halteelementen und dem Gegenbiegeelement die Gegenbiegung durchzuführen.

Vorzugsweise ist das wenigstens eine Gegenbiegeelement als Stempel ausgebildet, welcher relativ zu dem Halteelementen verschiebbar ist.

Vorzugsweise ist jeder von mehreren Biegeeinheiten einer Wellenwickelherstellvorrichtung wenigstens ein Gegenbiegeelement zugeordnet.

Vorzugsweise weist die wenigstens eine Biegeform eine Einbuchtung auf, wobei das Gegenbiegeelement dazu eingerichtet ist, den Draht in Richtung Einbuchtung zu biegen.

Vorzugsweise weist das Gegenbiegeelement wenigstens eine Einbuchtung zum Aufnehmen der Biegung der Spulenwicklung und wenigstens einen der Einbuchtung benachbarten Vorsprung zum Verbiegen eines sich an die Biegung anschließenden Bereichs des Drahtes auf.

Gemäß einem weiteren Aspekt schafft die Erfindung eine Biegeeinrichtung zum Formen einer Wellenform einer Wellenwicklung für eine Spulenwicklung einer elektrischen Maschine, umfassend eine erste Biegeeinheit nach einer der voranstehenden Ausgestaltungen und eine zweite Biegeeinheit nach einem der voranstehenden Ausgestaltungen, wobei eines der Halteelemente der ersten Biegeeinheit und eines der Halteelemente der zweiten Biegeeinheit mittels eines um einen Drehpunkt drehbaren starren Verbindungselements miteinander verbunden sind.

Es ist bevorzugt, dass das Verbindungselement und die durch dieses verbundenen Halteelemente einstückig an einem Formelement zum Formen eines geradlinigen zwischen zwei Biegungen befindlichen Drahtsegments ausgebildet sind.

Gemäß einem weiteren Aspekt schafft die Erfindung eine Wellenwickelherstellvorrichtung zum Herstellen einer Wellenwicklung für eine Spulenwicklung einer elektrischen Maschine, umfassend mehrere Biegeeinrichtungen nach einer der voranstehenden Ausgestaltungen und wenigstens eine Linearführung für die ersten und/oder die zweiten Halteelemente und/oder die ersten und/oder die zweiten Biegeeinheiten und/oder die Verbindungselemente und/oder die Formelemente.

Es ist bevorzugt, dass jeweils benachbarte Verbindungselemente oder Formelemente durch den Eingriff über die Steuerkurven der Biegeeinheiten gekoppelt sind, um ihre Verschiebebewegungen entlang der wenigstens einen Linearführung und Drehbewegungen zu synchronisieren.

Es ist bevorzugt, dass Drehpunkte der Verbindungselemente oder Formelemente auf einer längs oder parallel zu der Linearbewegungsrichtung verlaufenden Linie liegen.

Es ist bevorzugt, dass wenigstens zwei in Linearbewegungsrichtung benachbarte Biegeeinheiten spiegelbildlich angeordnet und/oder ausgebildet sind.

Es ist bevorzugt, dass wenigstens ein oder mehrere elastische Bauteile zum Zusammenhalten der Verbindungselemente oder Formelemente vorgesehen sind.

Vorzugsweise weist die Wellenwicklungsherstellvorrichtung eine Gegenbiegeeinrichtung mit wenigstens einem Gegenbiegeelement, vorzugsweise mit je wenigstens einem Gegenbiegeelement pro Biegeeinheit, zum Durchführen einer Gegenbiegung an der durch die Biegeeinheit durchgeführten Biegung auf.

Vorzugsweise sind Gegenbiegeelemente an den Stellen angeordnet, wo sich die Halteelemente der Biegeeinheiten nach durchgeführter Relativverschwenkung befinden, wobei die Gegenbiegeelemente dazu ausgebildet sind, auf die Halteelemente zu bewegt zu werden, um die Gegenbiegung durchzuführen. Vorzugsweise sind als Gegenbiegeelemente Stempel vorgesehen.

Gemäß einem weiteren Aspekt schafft die Erfindung ein Biegeverfahren zum Biegen einer Biegung einer Wellenwicklung für eine Spulenwicklung einer elektrischen Maschine, umfassend:
Halten eines ersten Segments eines zu biegenden Drahts mittels eines ersten Halteelements,
Halten eines zweiten Segments des zu biegenden Drahts mittels eines zweiten Halteelements,
Biegen eines Übergangsbereichs des Drahtes zwischen dem ersten Segment und dem zweiten Segment mittels einer Biegeform und
Steuern einer Relativverschwenkung und einer Relativverschiebung des ersten und des zweiten Halteelements beim Biegen des Übergangsbereichs mittels einer mechanischen Steuerkurve, über die das erste und das zweite Halteelement in Eingriff sind, wobei die Steuerkurve abhängig von der Biegeform ausgewählt wird, um den Übergangsbereich während des Biegevorganges gegen die Biegeform zu halten.

Vorzugsweise wird dabei die Steuerkurve abhängig von der Biegeform ausgewählt, um den Übergangsbereich während des Biegevorganges auf Spannung gegen die Biegeform zu halten.

Vorzugsweise umfasst das Biegeverfahren:
Durchführen einer Gegenbiegung mittels wenigstens eines Gegenbiegeelements nach erfolgter Relativverschwenkung der Halteelemente.

Gemäß einem weiteren Aspekt schafft die Erfindung ein Wellenwickelherstellverfahren zum Herstellen einer Wellenwicklung für eine Spulenwicklung einer elektrischen Maschine, umfassend synchrones Biegen mehrerer Biegungen mittels des Biegeverfahrens der voranstehend genannten Art in in Längsrichtung des Drahtes aufeinanderfolgenden Biegeeinheiten, die jeweils ein erstes Halteelement und ein zweites Halteelement aufweisen, die mittels der Steuerkurve in Eingriff sind, wobei aufeinanderfolgende Biegeeinheiten mittels drehbar und verschiebbar gelagerter starrer Verbindungselemente gekoppelt werden.

Bevorzugte Ausgestaltungen des Wellenwickelherstellverfahrens weisen wenigstens einen, mehrere oder alle der folgenden Schritte auf:
a) Verwenden einer Wellenwickelherstellvorrichtung nach einer der voranstehend erläuterten Ausgestaltungen,
b) Einlegen oder Einziehen des geraden Drahtes in die Wellenwickelherstellvorrichtung in einem expandierten Zustand, in dem Führungsnuten an den Halteelementen oder Formelementen zueinander ausgerichtet sind,
c) gleichmäßiges Zusammenfahren und gegensinniges Verdrehen der Verbindungselemente oder Formelemente zum Biegen der Biegungen,
d) Entnehmen des zu einer Wellenwicklung gebogenen Drahtes nach Erreichen der zusammengeschobenen Endposition.

Die Halteelemente sind vorzugsweise derart gestaltet, dass das erste und das zweite Segment fest eingespannt sind.

Vorzugsweise erfolgt beim Schritt c) ein definiertes Überbiegen und anschließend wieder ein Verfahren der Segmente in eine Endposition.

Hierdurch können die Segmente der fertig gebogenen Wellenwicklung parallel ausgerichtet werden.

Da der Draht nach dem Biegen stets ein wenig rückfedert, ist es vorteilhaft, den Draht zu überbiegen, d.h. weiter zu biegen als für die fertige Drahtform erforderlich, um die Rückfederung zu berücksichtigen und damit die gewünschte Endform zu erreichen.

Es ist dabei bevorzugt, dass die Halteelemente mit Nuten oder ähnlichen Aufnahmen zum beidseitigen Umfassen eines ersten Segments und eines zweiten Segments ausgebildet sind, zwischen denen die Biegung erfolgen soll.

Um die Grundform einer Wellenwicklung herzustellen, gibt es verschiedene Wickelverfahren. Die hier vorliegende Erfindung betrifft insbesondere das sogenannte Flachwickeln. Beim Flachwickeln ist das Ziel, den Draht mit rechteckigem Querschnitt möglichst schonend in einer Ebene in die gewünschte Form zu biegen. Dies lässt sich besonders vorteilhaft mit den Einheiten, Einrichtungen, Vorrichtungen und Verfahren gemäß den hier beigefügten Ansprüchen erreichen. Während die bisher aus [1] bis [5] bekannten Vorrichtungen nur ein Herstellen von meist rechteckigen oder undefinierten Kopfformen ermöglichen, kann mit Biegeeinheiten gemäß bevorzugten Ausgestaltungen der Erfindung eine Anpassung an unterschiedliche Formelemente erfolgen.

Bei besonders bevorzugten Ausgestaltungen werden Segmente in Halteelemente der Biegeeinheit eingespannt oder zumindest geführt. Dies wirkt Verformungen entgegen, die bei bekannten Vorrichtungen in den parallelen geraden Abschnitten zwischen den Biegungen vorkommen können, da diese bei den bekannten Vorrichtungen frei im Raum gebogen werden und nicht geführt oder eingespannt sind. Bei bevorzugten Ausgestaltungen der Erfindung kann außerdem eine Relativbewegung zwischen dem Draht und der Biegeeinheit oder deren Halteelementen entgegengewirkt werden, welche zu Schäden führen könnten.

Bei einer bevorzugten Ausgestaltung der Wellenwickelherstellvorrichtung wird zum Herstellen einer gleichmäßigen Wellenwickelmatte der gesamte Ablauf synchronisiert, d.h. die zeitgleichen Dreh- und Linearbewegungen aller Formelemente können gleichmäßig und geregelt stattfinden.

Ein Problem bei den Vorrichtungen aus [1] bis [5] ist, dass zwar jedes Formelement den gleichen Drehwinkel hat, jedoch alle Formelemente unterschiedliche lineare Verfahrwege haben. Eine Kopplung über eine Zahnstange und viele Stirnräder ist deshalb nicht sinnvoll. Alle Achsen einzeln anzutreiben, wäre sehr teuer, da ein zu einer Wellenwicklung gebogener Draht über 60 Windungen haben kann; zusätzlich müssten dann noch alle über 120 Antriebe (je ein Drehantrieb und ein Linearantrieb pro Formelement) synchronisiert und überwacht werden. Außerdem ist es vorteilhaft, den Draht definiert unter Spannung zu halten, um eine gleichbleibende Kopfform zu erreichen.

Bei der erfindungsgemäßen Biegeeinheit erfolgt eine Synchronisation der Bewegung benachbarter Halteelemente und/oder benachbarter Formelemente, an deren Enden die Halteelemente ausgebildet sind, über wenigstens eine mechanische Steuerkurve.

Bei einer bevorzugten Ausgestaltung der Wellenwickelherstellvorrichtung werden die Formelemente auf einer oder mehreren Linearführungen zusammengefahren und die Formelemente zeitgleich gegensinnig verdreht. Dabei sind benachbarte Formelemente über wenigstens eine mechanische Steuerkurve zur Synchronisierung ihrer Bewegungen miteinander in Eingriff. Beispielsweise rollen die Formelemente auf speziellen Wälzkurven aufeinander ab. Die Steuerkurven, insbesondere Wälzkurven, sind vorzugsweise so gestaltet, dass der Draht während des gesamten Biegevorganges unter Spannung gehalten wird. Dies ermöglicht das Biegen um mehrere Biegeradien und auch gerade Abschnitte mit nur einer Bewegung, wodurch komplexere Kopfformen herstellbar sind.

Die Wälzkurven können rein über Reibschluss miteinander in Eingriff sein. Vorzugsweise sind die Wälzkurven über Formschluss miteinander in Eingriff. Besonders bevorzugt ist eine Verzahnung entlang der Wälzkurve vorgesehen, die zusätzlich zu einem Reibschluss einen Formschluss ergibt, was einen symmetrischen und gleichmäßigen Biegevorgang ermöglicht, und somit eine genaue Synchronisation ermöglicht.

Im Folgenden werden einige Vorteile bevorzugter Ausgestaltungen der Erfindung näher erläutert.

Im Unterschied zum Stand der Technik besitzen die Formelemente vorzugsweise eine spezielle Abrollkurve, die alle erforderlichen Bewegungen miteinander synchronisieren.

Durch einen zusätzlichen Formschluss einer Verzahnung an den Wälzkurven erhält man eine sichere kinematische Kopplung der Formelemente mit den jeweiligen Nachbarn, was dazu führt, dass die ganze Biegekette miteinander möglichst genau verknüpft ist.

Die Abrollkurve kann optional so gestaltet werden, dass immer eine gewünschte Spannung auf dem Draht ist. Dadurch kann der Kopf direkt in eine definierte Form gebogen werden, da er sich eng an die Formelemente anlegt. Auch ein gleichmäßig definiertes Überbiegen und das Herstellen unterschiedlicher Abstände zwischen z.B. parallelen geraden Abschnitten ist möglich.

Durch einen zusätzlichen Formschluss an den Wälzkurven erhält man eine sichere kinematische Kopplung der Formelemente mit den jeweiligen Nachbarn, was dazu führt, dass die ganze Biegekette miteinander verknüpft ist. Das ermöglicht im Unterschied zum Stand der Technik das Biegen eines beliebig langen Drahtes, mit beliebig vielen Windungen mit nur einer angetriebenen Achse.

Durch Austausch einzelner Formelemente können dabei beliebig viele unterschiedlichste Kopfformen und Abstände zwischen den geraden Abschnitten hergestellt werden.

Vorzugsweise sind die Formelemente drehbar auf einer oder mehreren Linearführungen gelagert. Dabei sind sie vorzugsweise so angeordnet, dass die Enden immer gespiegelt ineinander greifen und die Drehachsen der Formelemente auf einer Linie liegen, welche parallel zu den Linearführungen ist.

Vorzugsweise werden die einzelnen Formelemente durch elastische Bauteile zusammengehalten, um zu gewährleisten, dass die Halteelemente an ihrer wenigstens einen Steuerkurve immer in Eingriff sind. Beispielsweise kann so eine Verzahnung an den Wälzkurven durch elastische Kräfte immer im Eingriff gehalten werden.

Der Biegevorgang weist vorzugsweise hauptsächlich drei Schritte auf, wie im Folgenden genauer dargestellt.

Optional kann der Draht auch noch überbogen werden, bevor die Endposition erreicht wird und der Grad der Überbiegung durch Anschläge an Rollenschuhen oder sonstigen Elementen der Formelemente oder deren Halterung eingestellt werden.

In einem ersten Schritt erfolgt ein Einlegen oder Einziehen des Drahts in die gerade Vorrichtung.

In einem zweiten Schritt erfolgt vorzugsweise ein gleichmäßiges Zusammenfahren und gegensinniges Verdrehen der Formelemente.

In einem dritten Schritt erfolgt ein Verfahren in eine Endposition. Dabei kann optional vorgesehen sein, dass vorher die Segmente über die Endposition hinaus verfahren werden, um ein Überbiegen durchzuführen und erst dann ein Verfahren in die Endposition erfolgt.

Bei einer weiteren Ausgestaltung des Verfahrens ist vorgesehen, dass nach Erreichen der Endposition der Formelemente mit einem oder mehreren Stempeln - Beispiel für Gegenbiegeelemente - eine Gegenbiegung in den Wellenkopf geformt wird. Dadurch wird die Rückfederung des Drahtes nach dem Herausnehmen aus der Vorrichtung reduziert. Außerdem kann der Draht aufgrund der geringen Spannung leichter entnommen werden.

Anschließend kann die Wellenwicklung entnommen werden.

Ein Ausführungsbeispiel wird im Folgenden anhand der beigefügten Zeichnungen näher erläutert. Darin zeigt:
- Fig. 1: eine schematische Darstellung einer Ausführungsform einer Biegeeinheit zum Biegen einer Biegung einer Wellenwicklung für eine Spulenwicklung einer elektrischen Maschine in einer expandierten Ausgangsposition vor einem Biegen;
- Fig. 2: eine schematische Darstellung der Biegeeinheit vergleichbar zu der Darstellung von Fig. 1, wobei sich die Biegeeinheit in einer Zwischenposition beim Biegen befindet;
- Fig. 3: eine Darstellung vergleichbar der Fig. 2 und 3, wobei sich die Biegeeinheit in einer Endposition am Ende eines Biegevorganges befindet;
- Fig. 4: eine schematische Draufsicht auf eine Wellenwickelherstellvorrichtung zum Herstellen einer Wellenwicklung für eine Spulenwicklung einer elektrischen Maschine, umfassend mehrere Biegeeinrichtungen, die mehrere Biegeeinheiten der in Fig. 1 dargestellten Art enthalten, wobei sich die Wellenwickelherstellvorrichtung in der Anfangsposition vor einem Biegen einer Wellenwicklung befindet;
- Fig. 5: eine Draufsicht auf die Wellenwickelherstellvorrichtung in der Zwischenposition;
- Fig. 6: eine Draufsicht auf die Wellenwickelherstellvorrichtung in der Endposition am Ende eines Biegevorganges;
- Fig. 7: eine Draufsicht auf ein Formelement zum Bilden von Biegeeinrichtungen der Wellenwickelvorrichtung der Fig. 4 bis 6;
- Fig. 8: eine Unteransicht auf das Formelement von Fig. 7; und
- Fig. 9: einen Querschnitt durch die Wellenwickelherstellvorrichtung von Fig. 4 zur Darstellung der Lagerung eines Formelements auf einem entlang einer Linearführung verfahrbaren Wagen, und
- Fig. 10: eine Ansicht vergleichbar Fig. 3 einer weiteren Ausgestaltung der Biegeeinheit in der Endposition.

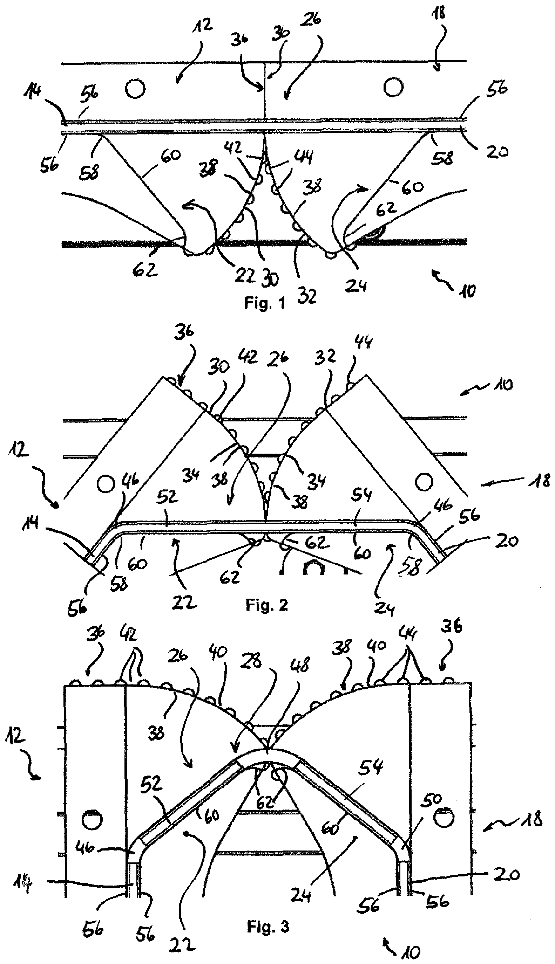

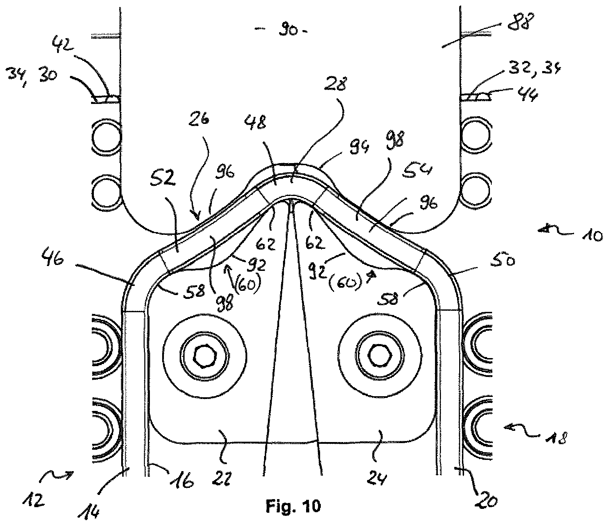

In den Fig. 1 bis 3 ist eine erste Ausführungsform einer Biegeeinheit 10 zum Biegen einer Biegung einer Wellenwicklung für eine Spulenwicklung einer elektrischen Maschine in unterschiedlichen Positionen während eines Biegevorganges dargestellt. Dabei zeigt Fig. 1 die Biegeeinheit 10 in einer Anfangsposition vor dem Biegevorgang; Fig. 2 die Biegeeinheit 10 in einer Zwischenposition während des Biegevorganges und Fig. 3 die Biegeeinheit an einer Endposition nach Durchführung des Biegevorganges. Fig. 10 zeigt eine Fig. 3 vergleichbare Ansicht einer weiteren Ausführungsform der Biegeeinheit 10 in der Endposition.

Die Biegeeinheit 10 weist bei den gezeigten Ausführungsformen ein erstes Halteelement 12 zum Halten eines ersten Segments 14 eines zu biegenden Drahts 16 und ein zweites Halteelement 18 zum Halten eines zweiten Segments 20 des zu biegenden Drahts 16 auf. Weiter weist die Biegeeinheit 10 wenigstens eine Biegeform 22, 24 zum Biegen eines Übergangsbereichs 26 des Drahtes 16 auf. Der Übergangsbereich 26 befindet sich zwischen dem ersten Segment 14 und dem zweiten Segment 20 und wird durch die Biegeeinheit 10 zu einem Kopf 28 geformt. Die wenigstens eine Biegeform 22, 24 ist entsprechend der Form des gewünschten Kopfes 28 ausgestaltet.

Hierzu sind das erste Halteelement 12 und das zweite Halteelement 18 zueinander relativ verschwenkbar und zueinander relativ verschiebbar. Die Fig. 1 bis 3 zeigen dabei unterschiedliche Relativpositionen der Halteelemente 12, 18 zueinander.

Zum Steuern der Relativverschwenkung und der Relativverschiebung des ersten Halteelements 12 und des zweiten Halteelements 18 sind das erste Halteelement 12 und das zweite Halteelement 18 miteinander über wenigstens eine mechanische Steuerkurve 30, 32 in Eingriff.

Die wenigstens eine Steuerkurve 30, 32 kann entsprechend des gewünschten Biegevorganges und der gewünschten Form des Kopfes 28 unterschiedlich gestaltet sein. Vorzugsweise ist die wenigstens eine Steuerkurve 30, 32 so gestaltet, dass der Übergangsbereich 26 während des Biegevorganges gegen die wenigstens eine Biegeform 22, 24 gehalten wird und vorzugsweise auch unter Spannung gehalten wird. Vorzugsweise ist die wenigstens eine Steuerkurve 30, 32 so gestaltet, dass bei dem Biegevorgang Relativbewegungen zwischen Draht 16 und den Halteelementen 12, 18 in Längsrichtung des Drahtes minimiert oder vermieden werden.

Insbesondere ist die wenigstens eine Steuerkurve 30, 32 an die jeweilige Biegeform 22, 24 angepasst, um entsprechend die Relativverschwenkung und die Relativverschiebung in Abhängigkeit von der Biegeform 22, 24 zu steuern.

Bei dem in den Fig. 1 bis 3 dargestellten Ausführungsbeispiel ist eine erste Steuerkurve 30 an dem ersten Halteelement 12 vorgesehen, und eine zweite Steuerkurve 32 ist an dem zweiten Halteelement 18 vorgesehen, wobei die Halteelemente 12, 18 sich einander über ihre Steuerkurven 30, 32 erfassen.

Die Steuerkurven 30, 32 sind als Abrollkurven oder Wälzkurven 34 ausgebildet, so dass die Halteelemente 12, 18 über ihre Steuerkurve 30, 32 aufeinander abrollen.

Die Steuerkurven 30, 32 sind nicht kreisrund, sondern mit Bereichen unterschiedlicher Krümmung und/oder mit einem geradlinigen Bereich 36 und einem gekrümmten Bereich 38 versehen. Insbesondere sind die Steuerkurven 30, 32 derart ausgestaltet, dass sie sich in einer Anfangsposition über einen geradlinigen Endbereich 36 erfassen und sich daran ein gekrümmter Bereich 38 mit allmählich zunehmender Krümmung anschließt. Der gekrümmte Bereich 38 kann z.B. im Querschnitt die Form eines Bereichs einer Ellipse ausweisen und somit ellipsoidal geformt sein.

Bei einer nicht näher dargestellten Ausgestaltung sind die Steuerkurven 30, 32 rein über flache Reibflächen - Abrollfläche 40 - in reinem Reibeingriff. Bei der dargestellten Ausführungsform ist jedoch neben einer Abrollfläche 40 noch eine erste Verzahnung 42 an der ersten Steuerkurve 30 und eine zweite Verzahnung 44 an der zweiten Steuerkurve 32 vorgesehen. Die erste und die zweite Verzahnung 42, 44 sind zueinander komplementär, so dass die Steuerkurven 30, 32 über ihre Verzahnungen 42, 44 in formschlüssigem Eingriff sind.

Zum Bilden der wenigstens einen Biegeform 22, 24 sind bei der dargestellten Ausführungsform der Biegeeinheit 10 an dem ersten Halteelement 12 eine erste Biegeform 22 und an dem zweiten Halteelement 18 eine zweite Biegeform 24 vorgesehen.

Die erste Biegeform 22 dient als Teilbereich einer Gesamt-Biegeform zum Formen eines ersten Teilbereichs des Kopfes 28, und die zweite Biegeform 24 dient als weiterer Teilbereich der Gesamt-Biegeform zum Formen eines zweiten Teilbereichs des Kopfes 28.

Wie in Fig. 3 dargestellt, lässt sich mit den dargestellten Biegeformen 22, 24 eine Dachform des Kopfes 28 herstellen, wobei der Übergangsbereich 26 zwischen entsprechenden gebogenen Bereichen 46, 50 zu den jeweiligen Segmenten 14, 20 hin einen ersten geradlinigen Abschnitt 52 und einen zweiten geradlinigen Abschnitt 54 sowie einen mittleren gebogenen Bereich 48 zwischen den beiden geradlinigen Abschnitten 52, 54 aufweist. Bei der dargestellten Ausführungsform ist die Dachform des Kopfes 28 symmetrisch; dies kann in anderen Ausführungsformen anders sein.

Entsprechend der Ausgestaltung des Kopfes 28 ist bei der dargestellten Ausführungsform die erste Biegeform 22 symmetrisch zu der zweiten Biegeform 24 ausgebildet; dies muss aber nicht sein; es kann auch je nach gewünschter Form des Kopfes 28 eine Paarung unsymmetrischer Biegeformen 22, 24 in einer Biegeeinheit 10 geben.

Bei der dargestellten Ausführungsform weist jede Biegeform 22, 24 in einem Übergangsbereich zu einer Führungsnut 56, die zum Halten und Fixieren des jeweiligen Segmentes 14, 20 vorgesehen ist, einen ersten gekrümmten Bereich 58, daran anschließend einen geradlinigen Bereich 60 und daran anschließend einen zweiten gekrümmten Bereich 62 auf.

Die Führungsnut 56 dient beim Biegevorgang zum Fixieren der Segmente 14, 20. Durch das beidseitige Festhalten des Drahtes 16 in der Führungsnut 56 ist das jeweilige Segment 14, 20 sowohl beim Verschwenken des jeweiligen Halteelements 12 in die eine Verschwenkrichtung als auch beim Biegen durch Verdrehen des Halteelements 12, 18 in die entgegengerichtete Verschwenkrichtung fixiert. Anstelle einer Führungsnut 56 kann das jeweilige Halteelement auch jede andere Form einer fixierenden Drahtaufnahme, die diese Funktion erfüllt, aufweisen, z.B. einen Röhrenabschnitt, zwei gegenüberliegende Haltebacken usw.

Fig. 1 zeigt die Biegeeinheit 10 in der Anfangsposition. Dabei sind das erste Halteelement 12 und das zweite Halteelement 18 zueinander derart ausgerichtet, dass ihre Führungsnuten 56 miteinander fluchten. In diese Führungsnuten 56 des ersten und des zweiten Halteelements 12, 18 ist der Draht 16 ungebogen eingelegt.

Der Abstand der äußeren Biegeradien - gebildet durch die ersten gekrümmten Bereiche 58 - entspricht der Länge der neutralen Faser des Biegekopfes 28.

In Fig. 2 ist die Biegeeinheit 10 in einer Zwischenposition dargestellt, bei der die Halteelemente 12, 18 zueinander verschwenkt und mit ihren - in den Fig. 1 bis 3 außerhalb des Bildes liegenden - Drehachsen zueinander verschoben sind. In dieser Zwischenposition ist der Draht 16 um den jeweiligen ersten Biegeradius gebogen, der durch die jeweiligen ersten gekrümmten Bereiche 58 gebildet ist. Aufgrund der Wälzkurve 34 der ersten und zweiten Steuerkurve 30, 32 ist der Draht 16 und insbesondere der Übergangsbereich 26 unter Spannung und wird somit gegen die ersten gekrümmten Bereiche 58 gezogen und legt sich an die geradlinigen Bereiche 60 der Biegeform 22, 24 an. Aufgrund der Wälzung entsteht somit in dem Übergangsbereich zwischen den ersten gebogenen Bereichen 46 keine Rundung, sondern definiert ein gerader Abschnitt, da der Draht 16 unter Spannung gehalten wird.

Fig. 3 zeigt die Position, in der der Draht 16 fertig gebogen ist. Die Halteelemente 12, 16 sind weiter zueinander verdreht, wobei ihre Drehpunkte weiter zueinander verschoben worden sind. Der Draht 16 wird auch um die zweiten gekrümmten Bereiche 62 gebogen, wird dabei durch die geradlinigen Bereiche 60 gehalten, so dass sich ein erster Radius an den ersten gebogenen Bereichen 46 und ein zweiter Radius an dem mittleren gebogenen Bereich 48 einstellt. Der Draht 16 ist um beide Radien gebogen, so dass sich die Dachform des Kopfes 28 einstellt.

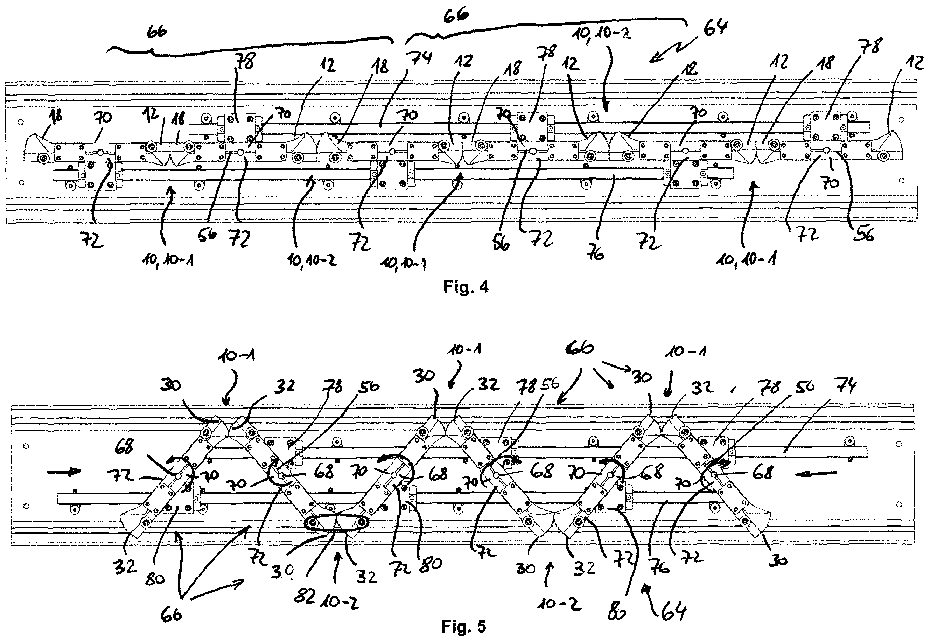

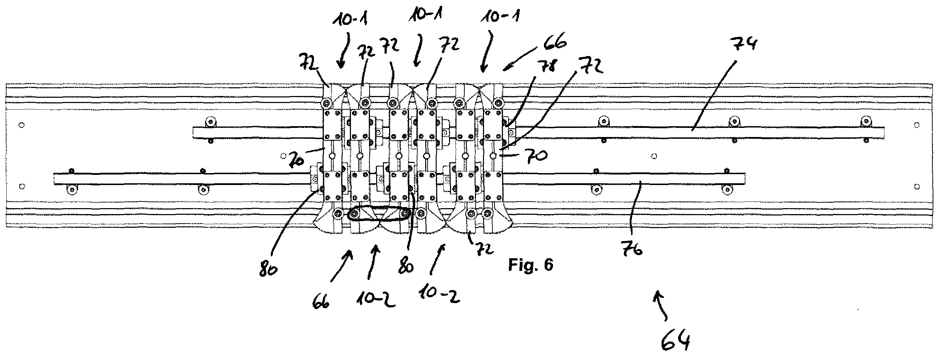

In den Fig. 4 bis 6 ist eine Wellenwickelherstellvorrichtung 24 dargestellt, die eine Mehrzahl von Biegeeinheiten 10 aufweist, welche synchron zueinander bewegbar sind. Die Wellenwickelherstellvorrichtung 64 ist dabei in drei unterschiedlichen Positionen dargestellt, wobei die Position nach Fig. 4 der Position der jeweiligen Biegeeinheiten 10 gemäß Fig. 1 entspricht, die Position der Fig. 5 der Position der jeweiligen Biegeeinheiten 10 gemäß Fig. 2 entspricht und die Position von Fig. 6 der Position der jeweiligen Biegeeinheiten 10 von Fig. 3 entspricht.

Die Wellenwickelherstellvorrichtung 64 weist mehrere Biegeeinrichtungen 66 zum Formen einer Wellenform einer Wellenwicklung für eine Spulenwicklung einer elektrischen Maschine auf. Die jeweilige Biegeeinrichtung 66 weist jeweils eine erste Biegeeinheit 10-1 gemäß den Darstellungen der Fig. 1 bis 3 und eine zweite Biegeeinheit 10-2, die spiegelbildlich zu den Darstellungen der Fig. 1 bis 3 ausgebildet ist, auf. Die ersten Biegeeinheiten 10-1 sind in den Fig. 5 und 6 oben dargestellt, und die zweiten Biegeeinheiten 10-2 sind in den Darstellungen der Fig. 5 und 6 unten dargestellt. Bei der Biegeeinrichtung 66 sind eines 18 der Halteelemente 12, 18 der ersten Biegeeinheit 10-1 und eines 12 der Halteelemente 12, 18 der zweiten Biegeeinheit 10-2 mittels eines um einen Drehpunkt 68 drehbaren starren Verbindungselements 70 miteinander verbunden.

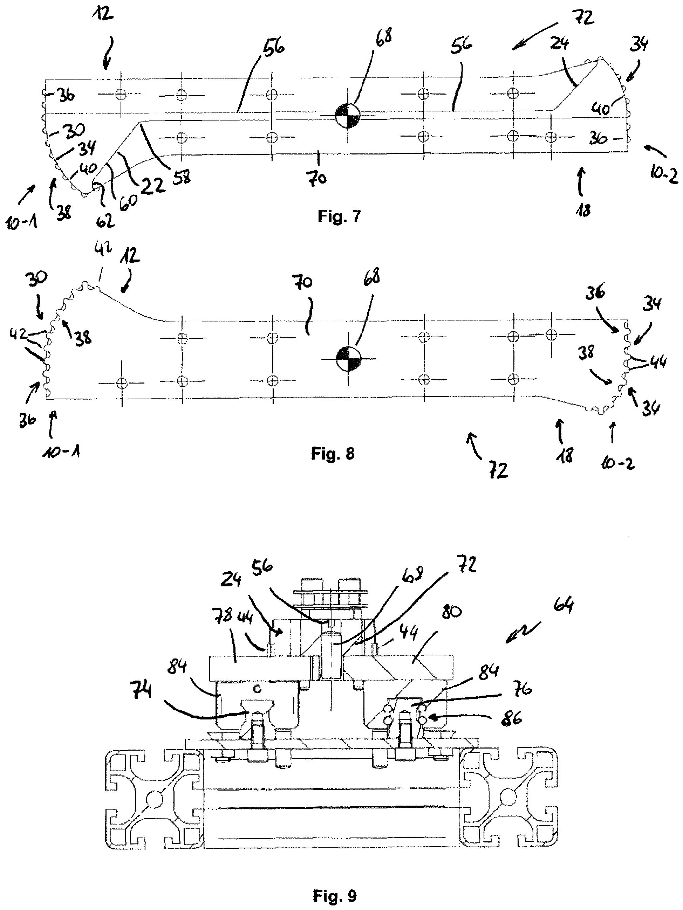

Dies ist in den dargestellten Ausführungsbeispielen derart gelöst, dass mehrere Formelemente 72 vorgesehen sind, von denen ein Ausführungsbeispiel näher in den Fig. 7 und 8 dargestellt ist. An dem Formelement 72 sind einstückig das Verbindungselement 70 und die durch dieses verbundenen Halteelemente 12, 18 ausgebildet. Hierzu ist ein erstes Halteelement 12 an einem ersten Endbereich des Formelements 72 ausgebildet, und ein zweites Halteelement 18 ist an dem zweiten Endbereich des Formelements 72 ausgebildet. Das Formelement 72 ist beispielsweise als flaches Stangenelement ausgebildet; der mittlere Bereich zwischen den Halteelementen 12, 18 bildet den Verbindungsbereich 70. Die Führungsnut 56 ist vorzugsweise durchgängig auch an diesem mittleren Bereich ausgebildet.

Vorzugsweise befindet sich ein Drehpunkt 68, um den das Formelement 72 und damit auch die daran ausgebildeten Halteelemente 12, 18 verschwenkbar sind, etwa mittig an dem Formelement, etwa in der Mitte der Verbindungselemente 70.

Eine Biegeeinrichtung 66 wird z.B. durch drei benachbart zueinander angeordnete Formelemente 72 gebildet und dient zum synchronen Ausbilden zweier benachbarter, jedoch sich in entgegengesetzte Richtungen erstreckender Köpfe 28 des Drahtes 16. Die Synchronisierung der Bewegung der einzelnen Biegeeinheiten 10 sowie benachbarter Biegeeinrichtungen 66 bzw. benachbarter Formelemente 72 erfolgt über den Eingriff der wenigstens einen Steuerkurve 30, 32 an jeder der Biegeeinheiten 10.

Wie weiter aus den Fig. 4 bis 6 sowie 9 ersichtlich, weist die Wellenwickelherstellvorrichtung 64 wenigstens eine Linearführung 74, 76 zur Führung der Verschiebung der Drehpunkte 68 der Formelemente 72 zueinander auf.

Bei der dargestellten Ausführungsform ist eine erste Linearführung 74 zum Führen einer ersten Gruppe von Formelementen 72 und eine zweite Linearführung 76 zum Führen einer zweiten Gruppe der Formelemente 72 vorgesehen. Die Formelemente 72 sind hierzu auf Wagen 78, 80 geführt, wobei erste Wagen 78 auf der ersten Linearführung 74 geführt sind und zweite Wagen 80 auf der zweiten Linearführung geführt sind.

Die Formelemente 72 der ersten Gruppe sind spiegelbildlich zu den Formelementen 72 der zweiten Gruppe angeordnet.

Wie aus Fig. 9 ersichtlich, weist jeder der Wagen 78, 80 einen Rollenschuh 84 mit einem Kugellager 86 zum Abrollen auf einer Schiene der jeweiligen Linearführung 74, 76 auf. Erste Wagen 78 der ersten Gruppe von Formelementen 72 und zweite Wagen 80 der zweiten Gruppe von Formelementen 72 sind in Längsrichtung der Linearführungen 74, 76 alternierend vorgesehen. Demnach folgt in Längsrichtung der Linearführungen 74, 76 auf jedes Formelement 72 der ersten Gruppe ein Formelement 72 der zweiten Gruppe.

Die Formelemente 72 können jeweils gleich ausgebildet sein. Bei einigen Ausführungen sind entsprechend der gewünschten Form aufeinanderfolgender Köpfe 78 mehrere unterschiedliche Formelemente 72 vorgesehen, um unterschiedliche Kopfformen zu erzeugen. Die jeweiligen Steuerkurven 30, 32 sind dabei jeweils an die gewünschten Bewegungsabläufe zum Formen des jeweiligen Kopfes 28 sowie die jeweiligen Biegeformen 22, 24 angepasst.

Aufgrund der Linearführung 74, 76 liegen alle Drehpunkte 68 der Formelemente 72 bei der dargestellten Ausführungsform auf einer längs oder parallel zu der Linearbewegungsrichtung verlaufenden Linie.

Bei der hier dargestellten Wellenwickelherstellvorrichtung 64 sind zwei in Linearbewegungsrichtung benachbarte Biegeeinheiten 10-1 und 10-2 spiegelbildlich zueinander angeordnet und/oder ausgebildet. Es können aber auch abweichende Ausbildungen an der ersten Biegeeinheit 10-1 und an der zweiten Biegeeinheit 10-2 vorgesehen sein.

Wie dies beispielsweise bei einer der Biegeeinheiten 10-2 in Fig. 2 durch eine Art Gummiband dargestellt ist, können das erste Halteelement 12 und das zweite Halteelement 18 durch ein elastisches Bauteil 82 mit einer elastischen Kraft beaufschlagt werden, die in Richtung Eingriff der Halteelemente 12, 18 über die wenigstens eine Steuerkurve 30, 32 wirkt. Hierzu werden beispielsweise die Halteelemente 12, 18 und damit auch die benachbarten Formelemente 72, an denen diese Halteelemente 12, 18 ausgebildet sind, in Richtung aufeinander vorgespannt. Die Vorspannkraft bewirkt, dass die Steuerkurven 30, 32 elastisch gegeneinandergedrückt werden, so dass der Reibschluss und/oder Formschluss verbessert wird.

Mit jeder Biegeeinheit 10 lässt sich ein Biegeverfahren zum Biegen einer Biegung einer Wellenwicklung für eine Spulenwicklung einer elektrischen Maschine durchführen. Dabei wird das erste Segment 14 des zu biegenden Drahtes 16 mittels des ersten Halteelements 12 gehalten, das zweite Segment 20 des zu biegenden Drahts 16 mittels des zweiten Halteelements 18 gehalten und weiter wird eine Relativverschwenkung und eine Relativverschiebung des ersten Halteelements 12 und des zweiten Halteelements 18 zum Biegen des Übergangsbereichs 26 zu dem Kopf 28 mittels der wenigstens einen mechanischen Steuerkurve 30, 32 gesteuert, über die die Halteelemente 12, 18 in Eingriff sind.

Die Form der jeweiligen Steuerkurve 30, 32 wird abhängig von der jeweils eingesetzten Biegeform 22, 24 ausgewählt. Insbesondere erfolgt die Auswahl derart, dass der Übergangsbereich 26 des Drahtes 16 während des Biegevorganges gegen die Biegeform 22, 24 gehalten wird.

Vorzugsweise erfolgt dies derart, dass der Übergangsbereich 26 unter Spannung gegen die Biegeform 22, 24 gehalten wird.

Mittels der in den Fig. 4 bis 9 dargestellten Wellenwickelherstellvorrichtung 64 lassen sich mehrere solcher Biegeverfahren zum Herstellen mehrerer Biegungen synchron durchführen.

Hierdurch wird ein Wellenwickelherstellverfahren zum Herstellen einer Wellenwicklung für eine Spulenwicklung einer elektrischen Maschine geschaffen, wobei synchron mehrere der Biegungen mittels des vorgenannten Biegeverfahrens in in Längsrichtung des Drahtes 16 aufeinanderfolgenden Biegeeinheiten 10, 10-1, 10-2 durchgeführt werden.

Bei einer Ausführungsform des Wellenwickelherstellverfahrens wird hierzu der Draht 16 in die zueinander ausgerichteten Führungsnuten 56 der Formelemente 72 eingeführt, insbesondere eingelegt oder eingezogen. Dies erfolgt in dem expandierten Zustand der Wellenwickelherstellvorrichtung 64, wie er in Fig. 4 dargestellt ist.

Anschließend werden die Formelemente 72 gleichmäßig und gegensinnig zusammengefahren und untereinander verdreht, wie dies in Fig. 5 dargestellt ist. Dabei erfolgt ein Biegen der Übergangsbereiche 26, wie dies für den einzelnen Übergangsbereich 26 anhand der Darstellungen der Fig. 1 bis 3 erläutert worden ist.

Bei einer bevorzugten Ausgestaltung erfolgt das Zusammenfahren und die Verdrehung derart, dass die Segmente 14, 20 über ihre eigentlich gewünschte Endposition hinaus bewegt werden, so dass der Draht an den Übergangsbereichen 26 überbogen wird. Anschließend erfolgt eine Zurückführung der Segmente 14, 20 durch ein gegensinniges Verdrehen um ein kleines Stück bis in die in Fig. 6 gezeigte Endposition, wo der fertig gebogene Draht 16 entnommen wird.

Für weitere Einzelheiten bezüglich möglicher Ausführungen des Drahtes 16, der Köpfe 28, des Stators oder sonstigen Bauteils der elektrischen Maschine sowie für mögliche Antriebe oder sonstige Bauteile der Wellenwickelherstellvorrichtung wird auf die Literaturstellen [1] bis [5] verwiesen.

In Fig. 10 ist eine weitere Ausführungsform der Biegeeinheit 10 in einer Darstellung vergleichbar zu Fig. 3 dargestellt, in der sich das erste Halteelement 12 und das zweite Halteelement 18 in der Endstellung befinden. Bei dieser Ausführungsform ist die Biegeeinheit 10 mit wenigstens einem Gegenbiegeelement 88, beispielsweise in Form eines Stempels 90 ausgestattet, welches auf die Halteelemente 12, 18 zu und von diesem weg bewegbar ist.

Die Biegeformen 22, 24 der Halteelemente 12, 18 weisen an dem geradlinigen Bereich 60 oder an Stelle des geradlinigen Bereichs 60 jeweils eine Einbuchtung 92 auf.

Das Gegenbiegeelement 88 weist eine Formfläche mit einer weiteren Einbuchtung 94 und sich an die Einbuchtung 94 beidseits anschließenden Vorsprüngen 96 auf, die den Einbuchtungen 92 der Halteelemente 12, 18 gegenüberliegen.

Bei dem Biegevorgang, der so abläuft wie er zu der ersten Ausführungsform anhand der Fig. 1 bis 3 erläutert worden ist, ist das Gegenbiegeelement 88 zunächst noch zurückgezogen, bis die Endstellung gemäß Fig. 3 und hier Fig. 10 erreicht worden ist. Dann wird das Gegenbiegeelement 88 auf die Halteelemente 12, 18 zu gefahren. Die Vorsprünge 96 erfassen die geradlinigen Abschnitte 52, 54 und drücken diese in Richtung der Einbuchtungen 92 an den Halteelementen, wodurch Gegenbiegungen 98 erreicht werden.

Vorzugsweise ist jede Biegeeinheit 10 der Wellenwickelherstellvorrichtung mit einem Gegenbiegeelement 88 versehen. Diese sind an denjenigen Stellen verschiebbar angebracht, wo sich die Biegeeinheiten 10 in der jeweiligen Endstellung gemäß Fig. 6 befinden.

Die hier zu einzelnen Ausführungsformen erläuterten Merkmale und Besonderheiten lassen sich beliebig zum Bilden weiterer Ausführungsformen kombinieren, wobei auch Merkmale weggelassen werden können. Der Umfang der Erfindung wird durch die beigefügten Ansprüche definiert.

### Bezugszeichenliste:

- 10: Biegeeinheit
- 10-1: erste Biegeeinheit
- 10-2: zweite Biegeeinheit
- 12: erstes Halteelement
- 14: erstes Segment
- 16: Draht
- 18: zweites Halteelement
- 20: zweites Segment
- 22: erste Biegeform
- 24: zweite Biegeform
- 26: Übergangsbereich
- 28: Kopf
- 30: erste (mechanische) Steuerkurve
- 32: zweite (mechanische) Steuerkurve
- 34: Wälzkurve
- 36: geradliniger Bereich (Steuerkurve)
- 38: gekrümmter Bereich (Steuerkurve)
- 40: Abrollfläche
- 42: erste Verzahnung
- 44: zweite Verzahnung
- 46: erster gebogener Bereich
- 48: mittlerer gebogener Bereich
- 50: zweiter gebogener Bereich
- 52: erster geradliniger Abschnitt
- 54: zweiter geradliniger Abschnitt
- 56: Führungsnut
- 58: erster gekrümmter Bereich (Biegeform)
- 60: geradliniger Bereich (Biegeform)
- 62: zweiter gekrümmter Bereich (Biegeform)
- 64: Wellenwickelherstellvorrichtung
- 66: Biegeeinrichtung
- 68: Drehpunkt
- 70: Verbindungselement
- 72: Formelement
- 74: erste Linearführung
- 76: zweite Linearführung
- 78: erster Wagen
- 80: zweiter Wagen
- 82: elastisches Bauteil
- 84: Rollenschuh
- 86: Kugellager
- 88: Gegenbiegeelement
- 90: Stempel
- 92: Einbuchtung (an Halteelement)
- 94: weitere Einbuchtung (an Gegenbiegeelement)
- 96: Vorsprung
- 98: Gegenbiegung

## Patentansprüche

1. Biegeeinheit (10) zum Biegen einer Biegung einer Wellenwicklung für eine Spulenwicklung einer elektrischen Maschine, mit einem ersten Halteelement (12) zum Halten eines ersten Segments (14) eines zu biegenden Drahts (16), einem zweiten Halteelement (18) zum Halten eines zweiten Segments (20) des zu biegenden Drahts (16) und wenigstens einer Biegeform (22, 24) zum Biegen eines Übergangsbereichs (26) des Drahtes (16) zwischen dem ersten Segment (14) und dem zweiten Segment (20), **dadurch gekennzeichnet,**
**dass** das erste und das zweite Halteelement (12, 18) über wenigstens eine mechanische Steuerkurve (30, 32) miteinander im direkten Eingriff sind zum Steuern einer Relativverschwenkung und einer Relativverschiebung des ersten und des zweiten Halteelements (12, 18),
**dass** die wenigstens eine Steuerkurve (30, 32) Bereiche unterschiedlicher Krümmung (36, 38) hat, und dass
a) die wenigstens eine Steuerkurve an einem der Halteelemente (12, 18) ausgebildet ist, wobei ein an dem anderen der Halteelemente (12, 18) ausgebildetes Abgreifelement an der Steuerkurve entlang fährt oder
b) das erste Halteelement (12) eine erste Steuerkurve (30) hat und das zweite Halteelement (18) eine zweite Steuerkurve (32) hat, derart dass die erste und die zweite Steuerkurve (30, 32) als Abrollkurven oder Wälzkurven (34) aufeinander abrollen.

2. Biegeeinheit (10) nach Anspruch 1,
**dadurch gekennzeichnet,**
**dass** die wenigstens eine Steuerkurve (30, 32)
2.1 einen geradlinigen Bereich (36) oder Endbereich und einen gekrümmten Bereich (38) oder Endbereich hat und/oder
2.2 einen von einer Kreisform abweichenden ellipsoidalen Kurvenbereich (38) hat und/oder
2.3 eine von einem Endbereich zu einem anderen Endbereich gesehen in Stufen und/oder allmählich zunehmende Krümmung aufweist und/oder
2.4 abhängig von der Biegeform (22, 24) derart gestaltet ist, dass der Draht (16) während des gesamten Biegevorgangs auf Spannung gehalten wird.

3. Biegeeinheit (10) nach einem der voranstehenden Ansprüche,
**dadurch gekennzeichnet,**
**dass** an der ersten und der zweiten Steuerkurve (30, 32) komplementäre Vorsprungs-Rücksprungs-Ausbildungen und/oder Verzahnungen (42, 44) zum Schaffen eines formschlüssigen Eingriffs zwischen dem ersten und dem zweiten Halteelement (12, 18) ausgebildet sind.

4. Biegeeinheit (10) nach einem der voranstehenden Ansprüche,
**dadurch gekennzeichnet,**
**dass** ein erster Bereich (22) der Biegeform (22, 24) an dem ersten Halteelement (12) und ein zweiter Bereich (24) der Biegeform (22, 24) an dem zweiten Halteelement (18) ausgebildet ist.

5. Biegeeinheit (10) nach einem der voranstehenden Ansprüche,
**dadurch gekennzeichnet,**
**dass** das erste und das zweite Halteelement (12, 18) jeweils eine Nutaufnahme oder Führungsnut (56) zum Festhalten des ersten bzw. zweiten Segments (14, 20) aufweisen.

6. Biegeeinheit (10) nach einem der voranstehenden Ansprüche,
**dadurch gekennzeichnet,**
**dass** das erste und das zweite Halteelement (12, 18) mittels wenigstens einer Vorspanneinrichtung elastisch in Richtung Eingriff zueinander vorgespannt sind.

7. Biegeeinheit (10) nach einem der voranstehenden Ansprüche,
**dadurch gekennzeichnet,**
**dass** die Biegeeinheit (10) ein Gegenbiegeelement zum Bilden wenigstens einer Gegenbiegung (98) aufweist, das bei zueinander zum Durchführen der Biegung verschwenktem ersten und zweiten Halteelement (12, 18) auf die Halteelemente (12, 18) zu bewegbar ist, um an dem Draht zwischen den Halteelementen (12, 18) und dem Gegenbiegeelement (88) die wenigstens eine Gegenbiegung (98) auszuformen.

8. Biegeeinrichtung (66) zum Formen einer Wellenform einer Wellenwicklung für eine Spulenwicklung einer elektrischen Maschine, **gekennzeichnet durch** eine erste Biegeeinheit (10-1) nach einem der voranstehenden Ansprüche und eine zweite Biegeeinheit (10-2) nach einem der voranstehenden Ansprüche, wobei eines der Halteelemente (12, 18) der ersten Biegeeinheit (10-1) und eines der Halteelemente (12, 18) der zweiten Biegeeinheit (10-2) mittels eines um einen Drehpunkt (68) drehbaren starren Verbindungselements (70) miteinander verbunden sind.

9. Wellenwickelherstellvorrichtung (64) zum Herstellen einer Wellenwicklung für eine Spulenwicklung einer elektrischen Maschine, **gekennzeichnet durch** mehrere Biegeeinrichtungen (66) nach Anspruch 8 und wenigstens eine Linearführung (74, 76) für die ersten und/oder die zweiten Halteelemente (12, 18) und/oder die ersten und/oder die zweiten Biegeeinheiten (10-1, 10-2) und/oder die Verbindungselemente (70) und/oder die Formelemente (72), wobei jeweils benachbarte Verbindungselemente (70) oder Formelemente (72) **durch** den Eingriff über die Steuerkurven (30, 32) der Biegeeinheiten (10-1, 10-2) gekoppelt sind, um ihre Verschiebebewegungen entlang der wenigstens einen Linearführung (74, 76) und Drehbewegungen zu synchronisieren.

10. Wellenwickelherstellvorrichtung (64) nach Anspruch 9,
**dadurch gekennzeichnet,**
**dass** Drehpunkte (68) der Verbindungselemente (70) oder Formelemente (72) auf einer längs oder parallel zu der Linearbewegungsrichtung verlaufenden Linie liegen.

11. Wellenwickelherstellvorrichtung (64) nach Anspruch 9 oder Anspruch 10, **dadurch gekennzeichnet,**
**dass** wenigstens zwei in Linearbewegungsrichtung benachbarte Biegeeinheiten (10; 10-1, 10-2) spiegelbildlich angeordnet und/oder ausgebildet sind.

12. Wellenwickelherstellvorrichtung (64) nach einem der Ansprüche 9 bis 11, **dadurch gekennzeichnet,**
**dass** wenigstens ein oder mehrere elastische Bauteile (82) zum Zusammenhalten der Verbindungselemente (70) oder Formelemente (72) vorgesehen sind.

13. Biegeverfahren zum Biegen einer Biegung einer Wellenwicklung für eine Spulenwicklung einer elektrischen Maschine, umfassend:
Halten eines ersten Segments (14) eines zu biegenden Drahts (16) mittels eines ersten Halteelements (12),
Halten eines zweiten Segments (20) des zu biegenden Drahts (16) mittels eines zweiten Halteelements (18),
Biegen eines Übergangsbereichs (26) des Drahtes (16) zwischen dem ersten Segment (14) und dem zweiten Segment (20) mittels einer Biegeform (22, 24), **gekennzeichnet durch** Steuern einer Relativverschwenkung und einer Relativverschiebung des ersten und des zweiten Halteelements (12, 18) beim Biegen des Übergangsbereichs (26) mittels einer mechanischen Steuerkurve (30, 32), über die das erste und das zweite Halteelement (12, 18) im direkten Eingriff sind, wobei die Steuerkurve (30, 32), die Bereiche (30, 32) unterschiedlicher Krümmung aufweist, abhängig von der Biegeform (22, 24) ausgewählt wird, um den Übergangsbereich (26) während des Biegevorganges gegen die Biegeform (22, 24) zu halten,
und wobei
a) ein an dem einen der Halteelemente (12, 18) ausgebildetes Abgreifelement an einer an dem anderen der Halteelemente (12, 18) ausgebildeten Steuerkurve entlang fährt oder
b) eine an dem ersten Halteelement (12) ausgebildete erste Steuerkurve (30) und ein an dem zweiten Halteelement (18) ausgebildete zweite Steuerkurve (32) als Abrollkurven oder Wälzkurven (34) aufeinander abrollen.

14. Biegeverfahren nach Ansprüche 13,
**gekennzeichnet durch**
Bilden einer Gegenbiegung (98) an dem Draht (16) mittels wenigstens eines Gegenbiegeelements (88) nach erfolgter Relativverschwenkung der Halteelemente (12, 18).

15. Wellenwickelherstellverfahren zum Herstellen einer Wellenwicklung für eine Spulenwicklung einer elektrischen Maschine, umfassend synchrones Biegen mehrerer Biegungen mittels des Biegeverfahrens nach einem der Ansprüche 13 bis 14 in in Längsrichtung des Drahtes (16) aufeinanderfolgenden Biegeeinheiten (10-1, 10-2), die jeweils ein erstes Halteelement (12) und ein zweites Halteelement (18) aufweisen, die mittels der Steuerkurve (30, 32) in Eingriff sind, wobei aufeinanderfolgende Biegeeinheiten (10-1, 10-2) mittels drehbar und verschiebbar gelagerter starrer Verbindungselemente (70) gekoppelt werden.

## Claims

1. Bending unit (10) for bending a bend of a wave winding for a coil winding of an electric machine, having a first holding element (12) for holding a first segment (14) of a wire (16) to be bent, a second holding element (18) for holding a second segment (20) of the wire (16) to be bent and at least one bending mold (22, 24) for bending a transition region (26) of the wire (16) between the first segment (14) and the second segment (20), **characterized in that** the first and the second holding elements (12, 18) are in direct engagement with each other via at least one mechanical control cam (30, 32) in order to control a relative pivoting and a relative displacement of the first and the second holding element (12, 18),
that the at least one control cam (30, 32) has regions of different curvature (36, 38) and that
a) the at least one control cam is formed on one of the holding elements (12, 18), wherein a pick up element formed on the other one of the holding elements (12, 18) moves along the control cam or
b) the first holding element (12) has a first control am (30) and the second holding element (18) has a second control cam (32) in such a manner that the first and the second control cam (30, 32) roll on each other as rolling cams (34).

2. Bending unit (10) according to claim 1,
**characterized**
**in that** the at least one control cam (30, 32)
2.1 has a rectilinear region (36) or end region and a curved region (38) or end region, and/or
2.2 has an ellipsoidal cam region (38) differing from a circular shape, and/or
2.3 has a curvature which increases in steps and/or gradually, as seen from one end region to another end region, and/or
2.4 is configured depending on the bending mold (22, 24) in such a manner that the wire (16) is kept tensioned during the entire bending operation.

3. Bending unit (10) according to any one of the preceding claims,
**characterized**
**in that** complementary projection/recess formations and/or toothings (42, 44) are formed on the first and the second control cam (30, 32) in order to create a form-fitting engagement between the first and the second holding element (12, 18).

4. Bending unit (10) according to any one of the preceding claims,
**characterized**
**in that** a first region (22) of the bending mold (22, 24) is formed on the first holding element (12) and a second region (24) of the bending mold (22, 24) is formed on the second holding element (18).

5. Bending unit (10) according to any one of the preceding claims,
**characterized**
**in that** the first and the second holding element (12, 18) each have a groove receptacle or guide groove (56) for holding the first or second segment (14, 20) in place.

6. Bending unit (10) according to any one of the preceding claims,
**characterized**
**in that** the first and the second holding element (12, 18) are elastically prestressed in the direction of engagement with each other by means of at least one prestressing device.

7. Bending unit (10) according to any one of the preceding claims,
**characterized**
**in that** the bending unit (10) has a counterbending element for forming at least one counterbend (98) which, when the first and second holding elements (12, 18) are pivoted with respect to each other in order to carry out the bending, is movable toward the holding elements (12, 18) in order to form the at least one counterbend (98) on the wire between the holding elements (12, 18) and the counterbending element (88).

8. Bending device (66) for forming a wave shape of a wave winding for a coil winding of an electric machine, **characterized by** a first bending unit (10-1) as claimed in one of the preceding claims and a second bending unit (10-2) as claimed in one of the preceding claims, wherein one of the holding elements (12, 18) of the first bending unit (10-1) and one of the holding elements (12, 18) of the second bending unit (10-2) are connected to each other by means of a rigid connecting element (70) which is rotatable about a pivot point (68).

9. Wave winding production apparatus (64) for producing a wave winding for a coil winding of an electric machine, comprising a plurality of bending devices (66) as claimed in claim 8 and at least one linear guide (74, 76) for the first and/or the second holding elements (12, 18) and/or the first and/or the second bending units (10-1, 10-2) and/or the connecting elements (70) and/or the shaping elements (72), wherein respectively adjacent connecting elements (70) or shaping elements (72) are coupled by the engagement via the control cams (30, 32) of the bending units (10-1, 10-2) in order to synchronize their displacement movements along the at least one linear guide (74, 76) and rotational movements.

10. Wave winding production apparatus (64) according to claim 9,
**characterized**
**in that** pivot points (68) of the connecting elements (70) or shaping elements (72) lie on a line running longitudinally or parallel to the linear movement direction.

11. Wave winding production apparatus (64) according to claim 9 or claim 10, **characterized**
**in that** at least two bending units (10; 10-1, 10-2) which are adjacent in the linear movement direction are arranged and/or formed in a mirror-inverted manner.

12. Wave winding production apparatus (64) according to any one of claims 9 to 11, **characterized**
**in that** at least one or more elastic components (82) are provided for holding together the connecting elements (70) or shaping elements (72).

13. Bending method for bending a bend of a wave winding for a coil winding of an electric machine, comprising:
holding a first segment (14) of a wire (16) to be bent by means of a first holding element (12),
holding a second segment (20) of the wire (16) to be bent by means of a second holding element (18),
bending a transition region (26) of the wire (16) between the first segment (14) and the second segment (20) by means of a bending mold (22, 24),
**characterized by**
controlling a relative pivoting and a relative displacement of the first and the second holding element (12, 18) during the bending of the transition region (26) by means of a mechanical control cam (30, 32) via which the first and the second holding element (12, 18) are in direct engagement, wherein the control cam (30, 32), which has regions (30, 32) of different curvature, is selected depending on the bending mold (22, 24) in order to hold the transition region (26) against the bending mold (22, 24) during the bending operation,
and wherein
a) a pick up element formed on the one of the holding elements (12, 18) moves along a control cam formed on the other one of the holding elements (12, 18) or
b) a first control am (30) formed on the first holding element (12) and a second control cam (32) formed on the second holding element (18) roll away on each other as rolling cams (34).

14. Bending method according to claim 13,
**characterized**
**by** forming a counterbend (98) on the wire (16) by means of at least one counterbending element (88) after relative pivoting of the holding elements (12, 18) has taken place.

15. Wave winding production method for producing a wave winding for a coil winding of an electric machine, comprising synchronous bending of a plurality of bends by means of the bending method as claimed in one of claims 13 to 14 in bending units (10-1, 10-2) which follow one another in the longitudinal direction of the wire (16) and each have a first holding element (12) and a second holding element (18) which are in engagement by means of the control cam (30, 32), wherein bending units (10-1, 10-2) following one another are coupled by means of rotatably and displaceably mounted rigid connecting elements (70).

## Revendications

1. Unité de pliage (10) pour le pliage d'un coude d'un enroulement ondulé pour un enroulement de bobine d'une machine électrique, comportant un premier élément de maintien (12) pour maintenir un premier segment (14) d'un fil (16) à plier, un deuxième élément de maintien (18) pour maintenir un deuxième segment (20) du fil (16) à plier et au moins un moule de pliage (22, 24) pour plier une zone de transition (26) du fil (16) entre le premier segment (14) et le deuxième segment (20), **caractérisée**
**en ce que** le premier et le deuxième élément de maintien (12, 18) sont en prise directe l'un avec l'autre par l'intermédiaire d'au moins une came de commande mécanique (30, 32) afin de contrôler un pivotement relatif et un déplacement relatif du premier et du second élément de maintien (12, 18),
que ladite au moins une came de commande (30, 32) comporte des zones de courbure différente (36, 38) et que
a) ladite au moins une came de commande est formée sur l'un des éléments de maintien (12, 18), un élément de prise formé sur l'autre élément de maintien (12, 18) se déplaçant le long de la came de commande, ou
b) le premier élément de maintien (12) comporte une première came de commande (30) et le deuxième élément de maintien (18) comporte une deuxième came de commande (32) de telle sorte que la première et la deuxième came de commande (30, 32) s'enroulent l'une sur l'autre en tant que cames de roulement (34).

2. Unité de pliage (10) selon la revendication 1,
**caractérisée**
**en ce que** ladite au moins une came de commande (30, 32)
2.1 a une partie rectiligne (36) ou partie d'extrémité et une partie incurvée (38) ou partie d'extrémité, et/ou
2.2 a une partie de came ellipsoïdale (38) différente d'une forme circulaire, et/ou
2.3 a une courbure qui augmente par degrés et/ou graduellement, vue d'une partie d'extrémité à une autre partie d'extrémité, et/ou
2.4 est configuré en fonction du moule de pliage (22, 24) de manière à ce que le fil (16) soit maintenu sous tension pendant toute l'opération de pliage.

3. Unité de pliage (10) selon l'une quelconque des revendications précédentes,
**caractérisée**
**en ce que** des formations complémentaires en saillie/en retrait et/ou des dentures (42, 44) sont formées sur la première et la deuxième came de commande (30, 32) afin de créer un engagement de forme entre le premier et le deuxième élément de maintien (12, 18).

4. Unité de pliage (10) selon l'une quelconque des revendications précédentes,
**caractérisée**
**en ce qu'**une première partie (22) du moule de pliage (22, 24) est formée sur le premier élément de maintien (12) et une deuxième partie (24) du moule de pliage (22, 24) est formée sur le deuxième élément de maintien (18).

5. Unité de pliage (10) selon l'une quelconque des revendications précédentes,
**caractérisée**
**en ce que** le premier et le deuxième élément de maintien (12, 18) comportent chacun un logement de rainure ou une rainure de guidage (56) pour maintenir en place le premier ou le deuxième segment (14, 20).

6. Unité de pliage (10) selon l'une quelconque des revendications précédentes,
**caractérisée**
**en ce que** le premier et le deuxième élément de maintien (12, 18) sont précontraints élastiquement dans la direction d'engagement l'un avec l'autre au moyen d'au moins un dispositif de précontrainte.

7. Unité de pliage (10) selon l'une quelconque des revendications précédentes,
**caractérisée**
**en ce que** l'unité de pliage (10) comporte un élément de contre-pliage pour former au moins un contre-pliage (98) qui, lorsque le premier et le deuxième éléments de maintien (12, 18) sont pivotés l'un par rapport à l'autre pour effectuer le pliage, est mobile vers les éléments de maintien (12, 18) pour former ledit au moins un contre-pliage (98) sur le fil entre les éléments de maintien (12, 18) et l'élément de contre-pliage (88).

8. Dispositif de pliage (66) pour former une forme d'onde d'un enroulement ondulé pour un enroulement de bobine d'une machine électrique, **caractérisé par** une première unité de pliage (10-1) selon l'une des revendications précédentes et une deuxième unité de pliage (10-2) selon l'une des revendications précédentes, dans lequel un des éléments de maintien (12, 18) de la première unité de pliage (10-1) et un des éléments de maintien (12, 18) de la deuxième unité de pliage (10-2) sont reliés l'un à l'autre au moyen d'un élément de liaison rigide (70) qui est rotatif autour d'un point de pivotement (68).

9. Appareil de production d'un enroulement ondulé (64) pour un enroulement de bobine d'une machine électrique, **caractérisé par** plusieurs moyens de pliage (66) selon la revendication 8 et au moins un guide linéaire (74, 76) pour les premiers et/ou les deuxièmes éléments de maintien (12, 18) et/ou les premiers et/ou les deuxièmes unités de pliage (10-1, 10-2) et/ou les éléments de liaison (70) et/ou les éléments de moulage (72), dans lesquels les éléments de liaison (70) ou les éléments de moulage (72) respectivement adjacents sont couplés par l'engagement via les cames de commande (30, 32) des unités de pliage (10-1, 10-2) afin de synchroniser leurs mouvements de déplacement le long d'au moins un guide linéaire (74, 76) et leurs mouvements de rotation.

10. Appareil de production d'un enroulement ondulé (64) selon la revendication 9,
**caractérisé**
**en ce que** les points de pivotement (68) des éléments de liaison (70) ou des éléments de moulage (72) se trouvent sur une ligne longitudinale ou parallèle à la direction du mouvement linéaire.

11. Appareil de production d'enroulement ondulé (64) selon la revendication 9 ou la revendication 10,
**caractérisé**
**en ce qu'**au moins deux unités de pliage (10; 10-1, 10-2) qui sont adjacentes dans la direction de mouvement linéaire sont disposées et/ou formées de manière inversée.

12. Appareil de production d'enroulement ondulé (64) selon l'une quelconque des revendications 9 à 11, **caractérisé**
**en ce qu'**au moins un ou plusieurs composants élastiques (82) sont prévus pour maintenir ensemble les éléments de liaison (70) ou les éléments de moulage (72).

13. Procédé de pliage pour plier un coude d'un enroulement d'onde pour un enroulement de bobine d'une machine électrique, comprenant:
maintenir un premier segment (14) d'un fil (16) à plier au moyen d'un premier élément de maintien (12),
maintenir un deuxième segment (20) du fil (16) à plier au moyen d'un deuxième élément de maintien (18),
plier une zone de transition (26) du fil (16) entre le premier segment (14) et le deuxième segment (20) au moyen d'un moule de pliage (22, 24),
**caractérisé par**
la commande d'un pivotement relatif et d'un déplacement relatif du premier et du deuxième élément de maintien (12, 18) pendant le pliage de la zone de transition (26) au moyen d'une came de commande mécanique (30, 32) par laquelle le premier et le deuxième élément de maintien (12, 18) sont en prise directe, la came de commande (30, 32), qui présente des régions (30, 32) de courbure différente, étant sélectionnée en fonction du moule de pliage (22, 24) afin de maintenir la zone de transition (26) contre le moule de pliage (22, 24) pendant l'opération de moulage,
et dans lequel
a) un élément de prise formé sur l'un des éléments de maintien (12, 18) se déplace le long d'une came de commande formée sur l'autre élément de maintien (12, 18) ou
b) une première came de commande (30) formée sur le premier élément de maintien (12) et une deuxième came de commande (32) formée sur le deuxième élément de maintien (18) s'enroulent l'une sur l'autre en tant que cames de roulement (34).

14. Procédé de pliage selon la revendication 13,
**caractérisé**
**par** la formation d'un contre-pliage (98) sur le fil (16) au moyen d'au moins un élément de contre-pliage (88) après le pivotement relatif des éléments de maintien (12, 18).

15. Procédé de production d'un enroulement ondulé pour un enroulement de bobine d'une machine électrique, comprenant le pliage synchrone d'une pluralité de pliages au moyen du procédé de pliage selon l'une des revendications 13 à 14 dans des unités de pliage (10-1, 10-2) consécutives dans la direction longitudinale du fil (16) et ont chacune un premier élément de maintien (12) et un second élément de maintien (18) qui sont en prise au moyen de la came de commande (30, 32), les unités de pliage (10-1, 10-2) consécutives étant couplées au moyen d'éléments de liaison rigides montés de manière rotative et déplaçable (70).
